# EUROPEAN PATENT APPLICATION

(11) **EP 4 851 228 A1**
(43) Date of publication of application: **09.12.2026**
(21) Application number: 26175021.0
(22) Date of filing: 28.04.2026
(51) Int. Cl.: C08G 77/52, C08L 83/14

(54) **HIGH TEMPERATURE CAPABLE SILPHENYLENE SILOXANE ELASTOMERS AND METHODS THEREOF**

(30) Priority: 04.06.2025 US 202519228511
(71) Applicant: The Boeing Company, Arlington, VA 22202 (US)
(72) Inventor: NOWAK, Andrew Paul, Arlington, 22202 (US); NOWAK, Gregory Phillip, Arlington, 22202 (US); ALBANESE, Kaitlin Rose, Arlington, 22202 (US)
(74) Representative: Sandri, Sandro

(57) **Abstract**

An elastomer composition and method for making the elastomer composition is disclosed, where the elastomer composition includes a silyl benzene species. The elastomer composition also includes at least one phenyl modified species. The elastomer composition also includes a vinyl functionalized species, and where the elastomer composition may include the structure: 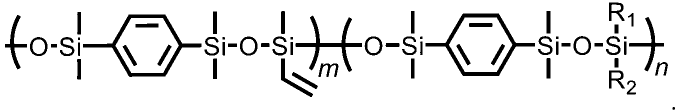 The elastomer composition also includes where *m* is from about 2 to about 200, *n* is from about 50 to about 5,000, R₁ may include CH₃, ethyl, propyl, butyl, or phenyl, and R₂ may include CH₃, ethyl, propyl, butyl, or phenyl. Implementations of the elastomer composition may include an antioxidant filler or a reinforcing filler. The elastomer composition maintains elasticity equal to or greater than 25% at temperatures from about 232.2°C to about 315.6°C (about 450°F to about 600°F) at 1,000 or more hours.

## Description

### TECHNICAL FIELD

The present teachings relate generally to silphenylenes and, more particularly, to high temperature capable silphenylene siloxane elastomers.

### BACKGROUND

Contemporary high-temperature elastomers are often based on poly(dimethylsiloxane) (PDMS), which is renowned for its thermal stability. This stability stems from its unique organic/inorganic repeating backbone, combining the beneficial properties of both types of materials. PDMS features silicon-oxygen (Si-O) bonds which contribute to its robustness and resilience at elevated temperatures, making it an ideal choice for applications requiring both flexibility and durability at high temperatures. However, with the growing demand for high-performance silicones, there is a strong focus on enhancing the thermal stability of traditional silicone elastomers. To effectively achieve this goal, the resulting elastomer should remain flexible at extreme temperatures in the mid-temp range, of from about 232.2°C to about 315.6°C (about 450°F to about 600°F) or 260°C to about 315.6°C (500°F to about 600°F), for extended periods of over 1,000 to 2,000 hours. Additionally, the desired chemistry should incorporate a room temperature curing mechanism while ensuring the material maintains its mechanical integrity. This combination of properties will produce a practical system that performs reliably in demanding environments. Current state-of-the-art (SOA) high temperature capable elastomers are based on polydimethylsiloxane (PDMS) composites and are thermally stable at temperature up to about 232.2°C, or 260°C, or 315.6°C (450°F, or 500°F, or 600°F) for extended durations. Higher temperature capable elastomers, for example, those capable of being subjected to 232.2°C to 315.6°C (450°F to 600°F), or 260°C to 315.6°C (500°F to 600°F) will allow for more efficient and higher-operating temperature engines for extended operating times, for extended periods of over 1,000 to 2,000 hours at these temperatures, with fewer repairs.

While the backbone structure of silphenylenes are more thermally robust than PDMS, the dimethyl siloxane repeat units can be susceptible to backbiting reactions at higher temperatures. Other known means of improving the stability and properties of elastomers involves dispersed antioxidant and reinforcing fillers to extend the limits of long-term thermal stability of these elastomers. Metal-oxides, for example, scavenge free-radicals and limit the diffusion of oxygen into the PDMS network which can catalyze the deconstruction of the polymer backbone at elevated temperatures. In examples of known high temperature capable elastomers aggressive heating can be necessary for curing or post-curing.

Therefore, it is desirable to fabricate high temperature capable elastomer composite based on durable siloxane-based polymers and elastomer formulations, which can maintain elasticity at 232.2°C - 315.6°C (450°F - 600°F) for over 1,000 to about 2,000 hours of continuous heating.

### SUMMARY

The following presents a simplified summary in order to provide a basic understanding of some aspects of one or more embodiments of the present teachings. This summary is not an extensive overview, nor is it intended to identify key or critical elements of the present teachings, nor to delineate the scope of the disclosure. Rather, its primary purpose is merely to present one or more concepts in simplified form as a prelude to the detailed description presented later.

An elastomer composition is disclosed. The elastomer composition includes a silyl benzene species. The elastomer composition also includes at least one phenyl modified species. The elastomer composition also includes a vinyl functionalized species; and where the elastomer composition may include the structure: 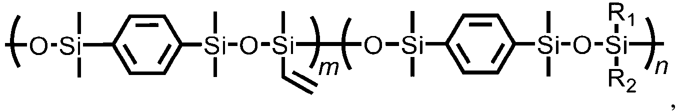 where *m* is from about 2 to about 200, *n* is from about 50 to about 5,000, R₁ may include CH₃, ethyl, propyl, butyl, or phenyl, and R₂ may include CH₃, ethyl, propyl, butyl, or phenyl. Implementations of the elastomer composition may include an antioxidant filler The antioxidant filler may include iron oxide. The antioxidant filler is present in an amount of from about 1 wt% to about 40 wt% based on a total weight of the elastomer composition. The elastomer composition may include a reinforcing filler. The reinforcing filler may include fumed silica. The reinforcing filler is present in an amount of from about 1 wt% to about 40 wt% based on a total weight of the elastomer composition. The at least one phenyl modified species may include bis(dimethylamino) diphenyl silane. The vinyl functionalized species is bis(dimethylamino) methylvinyl silane. A phenyl modified dimethylamino group of the at least one phenyl species may include at least two substituents on the aromatic ring. The elastomer composition may include a vinyl reactive species may include methylhydrosiloxane-dimethylsiloxane copolymer and pentaerythritol tetrakis(3-mercaptopropionate). The elastomer composition may include a catalyst may include tris(pentafluorophenyl) borane, a platinum(0)-1,3-divinyl-1,1,3,3-tetramethyldisiloxane complex solution, or a combination thereof. The elastomer composition maintains elasticity equal to or greater than 25% at temperatures from about 232.2°C (about 450°F) to about 315.6°C (about 600°F) at 1,000 or more hours.

An elastomer composition is disclosed. The elastomer composition includes 1,4 bis-(hydroxydimethylsilyl) benzene. The composition also includes at least one phenyl modified dimethylamino silane species. The composition also includes a vinyl functionalized dimethylamino silane species. The composition also includes iron oxide. The composition also includes fumed silica.

A method for making an elastomer composition is disclosed. The method for making an elastomer composition includes providing a 1,4 bis-(hydroxydimethylsilyl) benzene to a reaction vessel. The method also includes reacting the 1,4 bis-(hydroxydimethylsilyl) benzene with at least one phenyl modified dimethylamino silane species and at least one vinyl functionalized dimethylamino silane species to form a polymer material. The method also includes removing the polymer material from the reaction vessel. The method also includes adding an antioxidant filler to the polymer material. The method also includes incorporating a reinforcing filler into the polymer material. Implementations of the method for making an elastomer composition may include adding a catalyst to the elastomer composition. The phenyl modified dimethylamino silane species can include bis(dimethylamino) diphenyl silane, the vinyl functionalized dimethylamino silane species is bis(dimethylamino) methylvinyl silane, where the phenyl modified dimethylamino silane species is bis(dimethylamino) diphenyl silane with a molecular weight greater than or equal to 500 g/mol, and the catalyst may include tris(pentafluorophenyl) borane. The method may include curing the composition at temperatures between about -6.7°C (about 20°F) to about 37.8°C (about 100°F) for several hours. The method may include mixing the composition with a solvent before curing the composition. The method may include adding a vinyl reactive species to the reaction vessel.

The features, functions, and advantages that have been discussed can be achieved independently in various implementations or can be combined in yet other implementations further details of which can be seen with reference to the following description.

### BRIEF DESCRIPTION OF THE DRAWINGS

The accompanying drawings, which are incorporated in and constitute a part of this specification, illustrate embodiments of the present teachings and together with the description, serve to explain the principles of the disclosure. In the figures:
FIG. 1A depicts an application of a structural component including an exemplary silphenylene siloxane elastomer applied to one of more components of an aerospace vehicle.
FIG. 1B is an exploded view of a portion of the aerospace vehicle of FIG. 1A, in accordance with the present disclosure.
FIG. 2 is a series of chemical schematics depicting chemical reagents referenced in Examples 1A-4C, in accordance with the present disclosure.
FIG. 3 is a schematic of a synthesis of a silphenylene, via a polycondensation reaction between a silanol (HBS) and aminosilanes (VMS and DPS), in accordance with the present disclosure.
FIG. 4 is a plot depicting thermal aging of several exemplary composites at 315.6°C (600°F). The modified silphenylenes, Example 2B (phenylmethyl derivative) and Example 2C (diphenyl derivative), exhibit superior thermal stability compared to Comparative Example 2A (traditional dimethyl silphenylene) and Comparative Example 3 (SOA PDMS, RTV 60), in accordance with the present disclosure.
FIG. 5 is a plot depicting thermal aging of composites at 260°C (500°F), revealing a consistent increase in modulus for Comparative Example 2A (traditional dimethyl silphenylene) and Comparative Example 3 (SOA PDMS, RTV 60). In comparison, inventive Example 2A (phenylmethyl derivative) and inventive Example 2C (diphenyl derivative) demonstrate significantly superior thermal stability, in accordance with the present disclosure.
FIGS. 6A and 6B depict stress-strain curves in uniaxial extension, evaluated after 1,000 hours of thermal aging at 260°C (500°F) and 315.6°C (600°F), respectively, in accordance with the present disclosure.
FIG. 7 is a plot depicting room temperature hydrosilylation of phenylmethyl silphenylene (Example 4B, hollow circles) with PFPB showing promising stability after thermal aging for 700 hours at 315.6°C (600°F) compared to an analogous sample cured at >232.2°C (>450°F) (Example 2B, solid circles), in accordance with the present disclosure.

It should be noted that some details of the figures have been simplified and are drawn to facilitate understanding of the present teachings rather than to maintain strict structural accuracy, detail, and scale.

### DETAILED DESCRIPTION

Reference will now be made in detail to exemplary embodiments of the present teachings, examples of which are illustrated in the accompanying drawings. Wherever possible, the same reference numbers will be used throughout the drawings to refer to the same, similar, or like parts.

For the purposes of this disclosure, an antioxidant, antioxidant agent, or antioxidant filler is an additive, filler, or material used as an ingredient in a composition to prevent the oxidation of one or more molecules, polymers, or components within an elastomer composition or formulation or the purposes of this disclosure, a reinforcing filler is a material added to a polymer, elastomer, or other material to enhance its strength, stiffness, and other mechanical or thermal properties. Reinforcing fillers are typically stronger than the base material, can in some examples, have a high aspect ratio, or be chemically bonded or coupled into a polymer network by leveraging additional coupling agents or utilizing the benefit of the surface chemistry of the reinforcing filler in combination with chemical functionality of the material into which the filler is added.

For the purposes of this disclosure, elastomer flexibility, also referred to as elasticity is the ability of elastomeric materials to undergo deformation under stress and return to their original shape once the force causing the deformation and/or stress is removed. This elastomer or polymer behavior is derived from the molecular structure of the elastomer, which allows for durability and efficient mechanical response. The factors of rubber elasticity include molecular weight, crosslink density, polymer composition, and vulcanization. These elements influence the viscoelastic properties of rubber, determining its stretchability, stress-strain relationship, and overall elastomer performance in different industrial applications. Measurement of elastomer flexibility or elasticity can be provided with the use of tensile testing, dynamic mechanical analysis, and/or compression tests. Measurements including the aforementioned can enable the evaluation of resistance to deformation, stress-strain relationship, and mechanical. For the purposes of this disclosure, stability refers to the ability of an elastomer composition to retain or maintain any or all of its properties for longer periods of time under specific environmental conditions.

The present disclosure provides a method and composition related to modified silphenylene siloxane matrix enriched with Fe₂O₃ or other like antioxidant filler as an antioxidant and reinforced with fumed silica or other like reinforcing filler resulting in a composite that is 315.6°C (600°F) capable for over 1,000+ hours. While high-temperature elastomers are often based on poly(dimethylsiloxane) (PDMS), they can lose flexibility after short continuous aging, for example, <300 hours at 315.6°C (600°F). By modifying the silphenylene backbone chemistry and incorporating inorganic antioxidants along with reinforcing fillers, the present disclosure provides an elastomer capable of withstanding prolonged thermal aging, such as from about 1,000 to about 2,000 hours, at 315.6°C (600°F), while maintaining the flexibility of the elastomeric matrix. Formulations of the present disclosure also include a room temperature curing protocol that produces a structural resin that conveniently cures at ambient conditions while performing reliably in demanding environments.

Another strategy to improve the thermal stability of PDMS, aside from the addition of antioxidants, is through the use of silphenylene siloxane technology, known in the art as a more thermally robust option to unmodified PDMS. The incorporation of alternating siloxane and phenyl groups from phenyl species improve high temperature stability through reduction of backbiting reactions known to plague PDMS. Additional studies may have provided additional modifications to the silphenylene backbone to impart stability into the polymer backbone. While silphenylene chemistry has shown to be more robust from a thermal perspective under TGA temperature ramps, little work has been done on extended aging or antioxidant stabilizers or reinforcing fillers to push the limits of long-term thermal stability.

Another facet of present disclosure is the accessibility enabled by room temperature curing capabilities similar to SOA PDMS (RTV 60). A tailored formulation can be designed to retain performance of an unmodified, original system without compromising thermal stability. Room temperature cured composites can be achieved through condensation reactions, hydrosilylation reactions, or radical based mechanisms. These higher temperature capable elastomers, for example, those capable of being subjected to 232.2°C to 315.6°C (450°F to 600°F), or 260°C to 315.6°C (500°F to 600°F) will allow for more efficient and higher-operating temperature engines for extended operating times, of from about 1,000 to about 2,000 hours, or even longer, with fewer repairs. Other aviation components can benefit from improved long-term thermal stability as described herein.

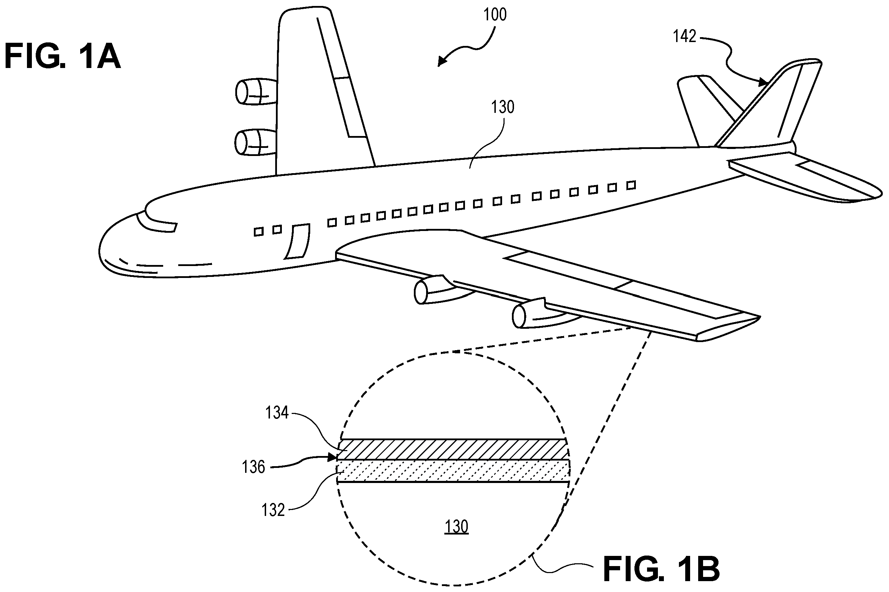

FIG. 1A depicts an application of a structural component including an exemplary silphenylene siloxane elastomer applied to one of more components of an aerospace vehicle. FIG. 1B is an exploded view of a portion of the aerospace vehicle of FIG. 1A, in accordance with the present disclosure. An application of the presently disclosed method and composition is shown on an aerospace vehicle 100, whereby vehicle substrate 130 or other components can be composed of or include the presently disclosed elastomer compositions. Exploded view FIG. 1B is shown, having vehicle substrate 130 or surface thereof with an optional primer layer 132 and a top layer 134 on a surface of the substrate 130, and/or onto a structural component of or onto a portion of a vehicle. A layer of a silphenylene siloxane elastomer 136 is positioned in between the optional primer layer 132 and the top layer 134. In one example the application of the presently disclosed elastomer composition is directed to or used on an external surface of the aerospace vehicle 100. In examples, additional coating layers, such as paints, coatings, or other protective coatings can be applied upon the top layer 134, internally or externally. While an exemplary example of an external substrate or surface of the aerospace vehicle 100 is shown herein, it is intended as a non-limiting example. There may further be other structural applications or areas in an aerospace vehicle 100 or other structure or vehicle where elastomer compositions as described herein may be used. Typical aerospace examples can include cool sections of exhaust-washed structures in trailing edge applications or high temperature organic gap filler material applications where a moderate amount of flexibility is required (such as >5%).

The present disclosure provides an elastomer composition, including 1,4 bis-(hydroxydimethylsilyl) benzene, at least one phenyl modified dimethylamino silane species, and a vinyl functionalized dimethylamino silane species. In examples, the elastomer composition can further include an antioxidant filler or a reinforcing filler. In examples, the antioxidant filler or reinforcing filler can incorporate examples as described herein. The antioxidant or reinforcement filler is present in an amount of from about 1 wt% to about 50 wt%, or from about 1 to about 40, or from about 1 to about 30 wt% based on a total weight of the total solids of the elastomer composition. In other examples, the at least one phenyl modified dimethylamino silane can include bis(dimethylamino) diphenyl silane, or the vinyl functionalized dimethylamino silane species can include bis(dimethylamino) methylvinyl silane. A phenyl modified dimethylamino group of the at least one phenyl modified dimethylamino silane species can include at least two substituents on the aromatic ring. In alternate examples, the elastomer composition can also include a vinyl reactive species such as methylhydrosiloxane-dimethylsiloxane copolymer and pentaerythritol tetrakis(3-mercaptopropionate). Additional materials can include trimethylolpropane tris(3-mercaptopropionate), 2,2'-(Ethylenedioxy)diethanethiol, (25-30% methylhydrosiloxane) - dimethylsiloxane copolymer,(7-9% methylhydrosiloxane) - dimethylsiloxane copolymer, (45-55% methylhydrosiloxane) - dimethylsiloxane copolymer, (6-7% methylhydrosiloxane) - dimethylsiloxane copolymer, (4-6% methylhydrosiloxane) - dimethylsiloxane copolymer, or the like, or combinations thereof. The vinyl reactive species can include (15-18% methylhydrosiloxane)-dimethylsiloxane copolymer, pentaerythritol tetrakis(3-mercaptopropionate). In the above materials, the percentage or range of percentages noted refers to the mol% of silyl hydride groups in the copolymer. It should be noted that there are other commercially available hydrosilanes with different mol% that can be used.

In the final cured state, the elastomer composition includes a silyl benzene species, such as 1,4 bis-(hydroxydimethylsilyl) benzene, at least one phenyl modified species, and a vinyl functionalized species, and wherein the elastomer composition is represented by the chemical structure: 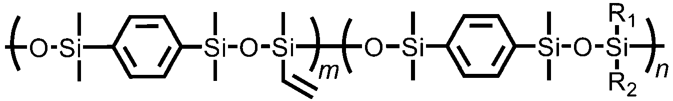 wherein m is from about 2 to about 200, or from about 2 to about 100, or from about 2 to about 50, *n* is from about 50 to about 5,000, from about 50 to about 2,500, or from about 50 to about 1,000, R₁ includes CH₃, ethyl, propyl, butyl, or phenyl, and R₂ includes CH₃, ethyl, propyl, butyl, or phenyl.

In examples of the elastomer composition, a catalyst can also be added or incorporated, such as tris(pentafluorophenyl) borane, a platinum(0)-1,3-divinyl-1,1,3,3-tetramethyldisiloxane complex solution, or a combination thereof. In addition to tris(pentafluorophenyl) borane or platinum(0)-1,3-divinyl-1,1,3,3-tetramethyldisiloxane complex solution (Karstedt Catalyst), other examples of catalyst can include benzoyl peroxide and N,N-dimethyl-*p*-toluidine. Catalyst can be added in amounts of from about 0.0001 wt% to about 5 wt%, or from about 0.001 wt% to about 5 wt%, or from about 0.01 wt % to about 1.0 wt % by weight of the total elastomer composition. In examples, the elastomer composition can incorporate any or all of the noted compositional elements in any combination thereof as described herein.

The present disclosure provides a method for making an elastomer composition, including the steps of providing a 1,4 bis-(hydroxydimethylsilyl) benzene to a reaction vessel, reacting the 1,4 bis-(hydroxydimethylsilyl) benzene with at least one phenyl modified dimethylamino silane species and at least one vinyl functionalized dimethylamino silane species to form a polymer material, adding an antioxidant filler, and incorporating a reinforcing filler. It should be noted that the polymer material is typically removed from the reaction vessel prior to adding or incorporating the antioxidant filler or the reinforcing filler. This can be done using standard rubber processing equipment, such as, for example, with the use of a roll mill. The method can further include adding a catalyst to the reaction vessel. After any fillers or other additives are added to the elastomer composition, the catalyst can be added to the composition. Curing of the elastomer composition, according to the present method, can include curing the composition at temperatures between about -6.7°C to about 37.8°C (20°F to about 100°F) for several hours. The method can further be modified or practiced in order to incorporate where the phenyl modified dimethylamino silane species is bis(dimethylamino) diphenyl silane, the vinyl functionalized dimethylamino silane species is bis(dimethylamino) methylvinyl silane, or where the phenyl modified dimethylamino silane species is bis(dimethylamino) diphenyl silane with a molecular weight greater than or equal to 500 g/mol. The method can include any combination of the materials described herein, and also further include mixing the composition with a solvent before curing the composition.

Platinum catalysts are reactive, especially at high temperatures which can cause Si-O bond exchange (backbiting reactions/depolymerization). Organic catalysts do not have high-valent metal centers which owes to redox side reactions that can occur with Pt catalysts. An additional room temperature cure mechanism could include a thiol-ene click reaction. This involves a thiol (pentaerythritol tetrakis(3-mercaptopropionate ), a radical source (BPO), and an accelerator (DMPT). The use of a heteroatom with this strategy results in thermal stability issues akin to Pt where at high-temps, sulfur atoms are known to turn into radicals which can react with the Si-O backbone.

1,4 bis-(Hydroxydimethylsilyl) benzene (HBS), a silanol species, can be used in the synthesis of high molecular weight silphenylene compositions exhibiting improved thermal stability and mechanical properties. HBS serves as a building block for constructing polymer chains through condensation reactions with amino functional groups present on other reactants. The hydroxydimethylsilyl substituents attached to the benzene ring provide a reactive site that may participate in these chemical reactions, leading to the formation of robust and thermally stable silphenylene-based materials.

The use of HBS can be combined with phenyl-modified dimethylamino silane species, such as bis(dimethylamino)phenylmethylsilane or diphenyldimethysilanes. These combinations can produce high molecular weight polymers that exhibit improved dimensional stability and mechanical properties due to the presence of bulky substituents on the polymer chain. The synthesis process involving HBS typically involves reacting it with vinyl functionalized dimethylamino silanes, such as bis(dimethylamino)methylvinylsilane (MVS) or diphenyldimethysilanes. The resulting polymer chains can also be further modified through the addition of other reactants and additives to achieve specific properties.

The phenyl modified dimethylamino silane species can be used as a component in the high molecular weight silphenylene composition disclosed herein. Examples of this compound can include bis(dimethylamino)phenylmethylsilane (DPS), which can be derived from 1,4-bis-(hydroxydimethylsilyl)benzene (HBS). The phenyl group attached to the dimethylamine moiety serves a dual purpose: it reduces backbiting reactions between siloxane units at high temperatures and provides additional stability to the polymer chain. This modification is enables the achievement of improved thermal stability, as evidenced by its ability to maintain elasticity of at or greater than 10%, or at or greater than 25%, or at or greater than 50% after 1,000 hours of aging at 600°F.

In addition to its role in reducing backbiting reactions, the incorporation of phenyl modified dimethylamino silane species can provide improved mechanical properties such as tensile strength and flexibility. The diphenyl group provides additional cross-linking sites within the polymer chain, which can enhance overall molecular cohesion and resistance to deformation under stress.

The vinyl functionalized dimethylamino silane species is also used in forming high molecular weight silphenylene compositions as described herein. These vinyl functionalized dimethylamino silane species can be added to react with 1,4-bis-(hydroxydimethylsilyl)benzene (HBS), through condensation reactions that promote polymer chain growth and cross-linking. The vinyl functionalized dimethylamino silane species may be specifically structured as bis(dimethylamino)methylvinylsilane or other analogous compounds with varying substituents on their molecular structure.

The optional vinyl reactive species in the elastomeric compositions described herein can refer to molecules that may react with other components of the silphenylene-based material during synthesis or curing processes. These additives are used for enhancing the mechanical properties and thermal stability of the final product by promoting cross-linking reactions, grafting interactions, or chain extension mechanisms within the polymer matrix.

One example of an optional vinyl reactive species is pentaerythritol tetrakis(3-mercaptopropionate), which may react with other silanes to form covalent bonds and improve material strength. Another example is (15-18% methylhydrosiloxane)-dimethylsiloxane copolymer, a vinyl-functionalized dimethylamino silane that can participate in condensation reactions during synthesis or curing processes. The incorporation of these reactive species into the composition can provide tailored control over material properties such as flexibility, tensile strength, and thermal stability. Other illustrative examples can include (25-30% methylhydrosiloxane) - dimethylsiloxane copolymer, (7-9% methylhydrosiloxane) - dimethylsiloxane copolymer, (45-55% methylhydrosiloxane) - dimethylsiloxane copolymer, (6-7% methylhydrosiloxane) - dimethylsiloxane copolymer, or (4-6% methylhydrosiloxane) - dimethylsiloxane copolymer, for example.

The catalytic species or catalyst employed in the synthesis of the elastomer composition can be tris(pentafluorophenyl) borane, platinum(0)-1,3-divinyl-1,1,3,3-tetramethyldisiloxane complex solution (Karstedt Catalyst) or other examples, such as benzoyl peroxide and N,N-dimethyl-*p*-toluidine, pentamethylcyclopentadienyltris (acetonitrile)ruthenium(II) hexafluorophosphate, tris(triphenylphosphine)rhodium(I) chloride, dichloro(p-cymene)ruthenium(II) dimer, benzeneruthenium(II) chloride dimer, bicyclo[2.2.1]hepta-2,5-diene-rhodium(I) chloride dimer, or bis(1,5-cyclooctadiene)rhodium(I) tetrafluoroborate hydrate. The catalyst can be added after the polymer is isolated from the synthesis reaction.

### Materials:

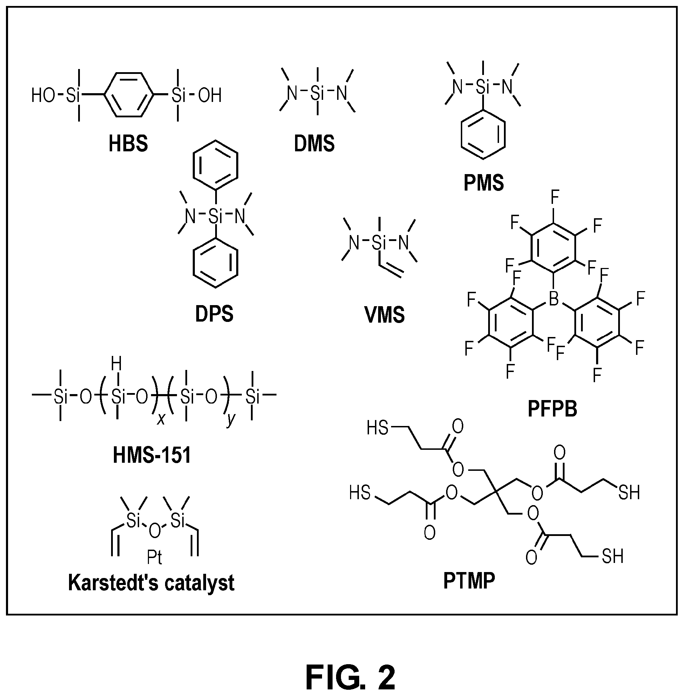

FIG. 2 is a series of chemical schematics depicting chemical reagents referenced in Examples 1A-4C, in accordance with the present disclosure. 1,4 bis-(Hydroxydimethylsilyl) benzene (HBS) was obtained from BOC Sciences. Fe2O3 (5 µm), pentaerythritol tetrakis(3-mercaptopropionate) (PTMP), xylenes, and toluene were purchased from Sigma-Aldrich. Bis(dimethylamino) dimethyl silane (DMS), bis(dimethylamino) methylvinyl silane (MVS), bis(dimethylamino) phenylmethyl silane (PMS), Platinum(0)-1,3-divinyl-1,1,3,3-tetramethyldisiloxane complex solution (Karstedt Catalyst, 2 wt% in xylenes), and (15-18% methylhydrosiloxane)-dimethylsiloxane copolymer, trimethylsiloxane terminated (HMS-151) were purchased from Gelest. Bis(dimethylamino) diphenyl silane (DPS) was prepared by BOC chemicals. Tris(pentafluorophenyl) borane (PFPB), and N,N-dimethyl-*p*-toluidine (DMPT) were purchased from TCI. Unless otherwise noted all materials were used as received.

### Synthesis Steps and Examples:

Example 1A: HBS (25.0 g, 0.22 mol) was added to a three necked round bottom flask and dissolved in 100 mL of toluene. The reaction vessel was purged with nitrogen and refluxed (104°C) in an oil bath. DMS (15.6 g, 0.21 mol) was added over the course of the day with a syringe pump (at 25 µL min⁻¹) and MVS (0.61 g, 0.008 mol) was added after approximately halfway through the DMS addition. The next day, DMS was added slowly to achieve 1:1 stoichiometry (HBS:DMS) or a highly viscous resin. Reaction was left to react for 2 hours and then precipitated into methanol (1Lx 3).

Example 1B: HBS (25.0 g, 0.22 mol) was added to a three necked round bottom flask and dissolved in 100 mL of toluene. The reaction vessel was purged with nitrogen and refluxed (at 104°C) in an oil bath. PMS (22.2 g, 0.21 mol) was added over the course of the day with a syringe pump (25 µL min⁻¹) and MVS (0.61 g, 0.,008 mol) was added after approximately halfway through the PMS addition. The next day, remaining PMS was added slowly to achieve 1:1 stoichiometry (HBS:PMS) or a highly viscous resin. Reaction was left to react for 2 hours and then precipitated into methanol (1Lx 3).

Example 1C: HBS (10.0 g, 0.09 mol) was added to a three necked round bottom flask and dissolved in 100 mL of toluene. The reaction vessel was purged with nitrogen and refluxed (104 °C) in an oil bath. DPS (11.53 g, 0.09mol) was added over the course of the day with a syringe pump (25 µL min⁻¹) and MVS (0.24 g, 0.003 mol) was added after approximately halfway through the DPS addition. The next day, remaining DPS was added slowly to achieve 1:1 stoichiometry (HBS:DPS) or a highly viscous resin. Reaction was left to react for an additional 24 hours and then precipitated into methanol (1Lx 3).

Comparative Example 2A: Silphenylene (Example 1A, 3.0g), xylenes (1.0 g), Fe2O3 (3.0 g), and fumed silica (3.0 g) were added to a FlackTek cup and speedmixed at 2,000 rpm for 5 minutes. The resulting paste was mixed in a roll mill, collected, then diluted in 3 g of xylenes and left to absorb the solvent overnight. Additional mixing at 2,000 rpm was conducted before casting on polytetrafluoroethylene (PTFE) film. The film was put in the oven to cure at 260°C (500°F) for 3 days.

Example 2B: Silphenylene (Example 1B, 3.0g), xylenes (1.0 g), Fe2O3 (3.0 g), and fumed silica (3.0 g) were added to a FlackTek cup and speedmixed at 2,000 rpm for 5 minutes. The resulting paste was mixed in a roll mill, collected, then diluted in 3 g of xylenes and left to absorb the solvent overnight. Additional mixing at 2,000 rpm was conducted before casting on PTFE film. The film was put in the oven to cure at 260°C (500°F) for 3 days.

Example 2C: Silphenylene (Example 1C, 3.0g), xylenes (1.0 g), Fe2O3 (3.0 g), and fumed silica (3.0 g) were added to a FlackTek cup and speedmixed at 2,000 rpm for 5 minutes. The resulting paste was mixed in a roll mill, collected, then diluted in 3 g of xylenes and left to absorb the solvent overnight. Additional mixing at 2,000 rpm was conducted before casting on PTFE film. The film was put in the oven to cure at 260°C (500°F) for 3 days.

Comparative Example 3, SOA PDMS, RTV 60: Resin (5.0 g) and supplied tin catalyst (0.5 wt%) was added to a FlackTek cup and speedmixed at 2,000 rpm. The resulting resin was cast on PTFE film and left overnight to cure at room temperature.

Example 4A: Silphenylene (Example 1A, 3.0g), xylenes (1.0 g), Fe2O3 (3.0 g), and fumed silica (3.0 g) were added to a FlackTek cup and speedmixed at 2,000 rpm for 5 minutes. The resulting paste was mixed in a roll mill, collected, then diluted in 3 g of xylenes and left to absorb the solvent overnight. Karstedt Catalyst (1 µL) and HMS-151 (180 mg) were added to the cup and additional mixing at 2,000 rpm was conducted before casting on PTFE film. The film was left at room temperature over night to cure.

Example 4B: Silphenylene (Example 1B, 3.0g), xylenes (1.0 g), Fe2O3 (3.0 g), and fumed silica (3.0 g) were added to a FlackTek cup and speedmixed at 2,000 rpm for 5 minutes. The resulting paste was mixed in a roll mill, collected, then diluted in 3 g of xylenes and left to absorb the solvent overnight. HMS-151 (180 mg) and PFPB (100 µL, 1mg mL⁻¹ stock solution) were added and mixed at 2,000 rpm before casting on PTFE film. The film left at room temperature over night to cure.

Example 4C: Silphenylene (Example 1C, 3.0g), xylenes (1.0 g), Fe2O3 (3.0 g), and fumed silica (3.0 g) were added to a FlackTek cup and speedmixed at 2,000 rpm for 5 minutes. The resulting paste was mixed in a roll mill, collected, then diluted in 3 g of xylenes and left to absorb the solvent overnight. PTMP (40 mg) and benzoyl peroxide (4 mg) were added and mixed at 2,000 rpm for 4 minutes then DMPT (1 drop) was mixed in by hand and cast on PTFE film. The film left at room temperature over night to cure.

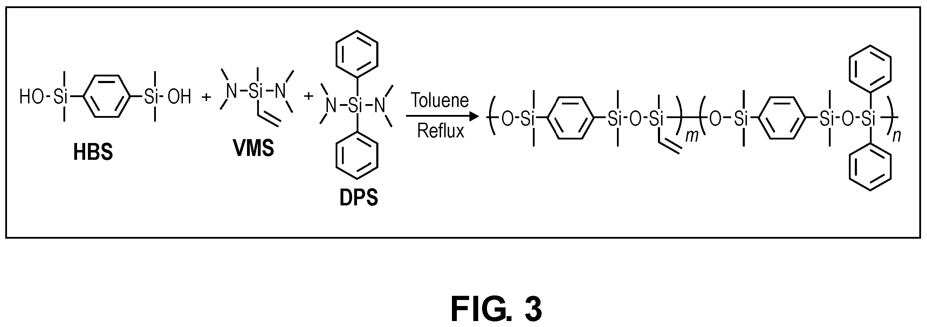

FIG. 3 is a schematic of a synthesis of a silphenylene, via a polycondensation reaction between a silanol (HBS) and aminosilanes (VMS and DPS), in accordance with the present disclosure. This general reaction scheme and process was followed in the aforementioned examples.

In examples, antioxidant fillers, such as, but not limited to iron oxide (Fe₂O₃), silylated ferrocenes, ceric oxide (CeO₂), alloys of bismuth, lead and tin, or combinations thereof can be incorporated into the modified silphenylene formulations of the present disclosure. Furthermore, reinforcing fillers such as, but not limited to silicon dioxide or silica (SiO₂), and in general, any inorganic rigid particle with a primary particle size of 50nm or less can be incorporated into the modified silphenylene formulations of the present disclosure.

In addition to mixing the modified silphenylene formulations of the present disclosure with xylenes and other fillers to form a paste, other solvents such as, but not limited to, tetrahydrofuran (THF), benzenes, and hexanes can be used as diluents or viscosity modifiers for the presently disclosed modified silphenylene formulations. In examples, speed mixing at 2,000 rpm for 5 minutes can be used in processing steps, or alternatively, using an overhead mixer. In still other examples, alternate curing processes, for example, 260°C (500°F) for 24 to 72 hours can be used for curing the modified silphenylene formulations as disclosed herein.

### Results

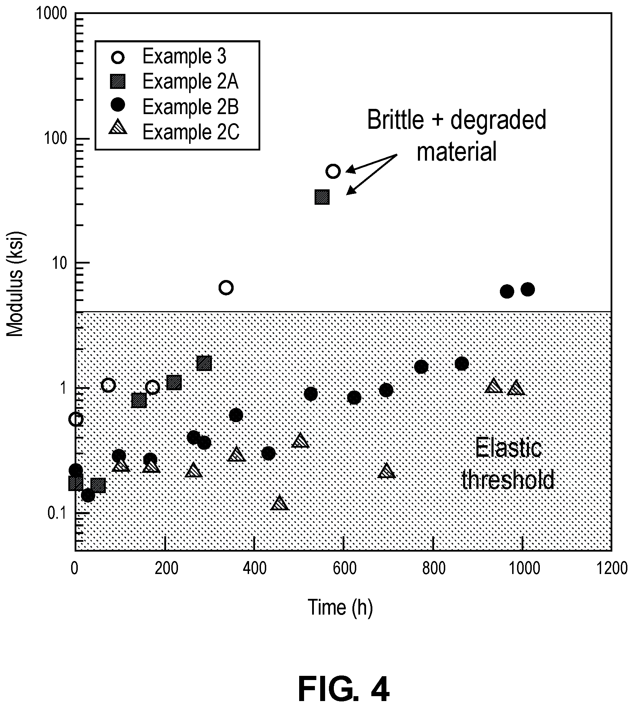

FIG. 4 is a plot depicting thermal aging of several exemplary composites at 600 °F. The modified silphenylenes, inventive Example 2B (phenylmethyl derivative) and inventive Example 2C (diphenyl derivative), exhibit superior thermal stability compared to Comparative Example 2A (traditional dimethyl silphenylene) and Comparative Example 3 (SOA PDMS, RTV 60), in accordance with the present disclosure. It can be observed that Comparative Example 3 and Comparative Example 2A begin to thermally degrade between 200 and 400 hours, and even further by close to 600 hours when aged at 315.6°C (600°F). The descriptive Examples 2B and 2C of the present disclosure, alternatively, retain a lower, acceptable modulus beyond 600 hours and even up to 1,000 hours.

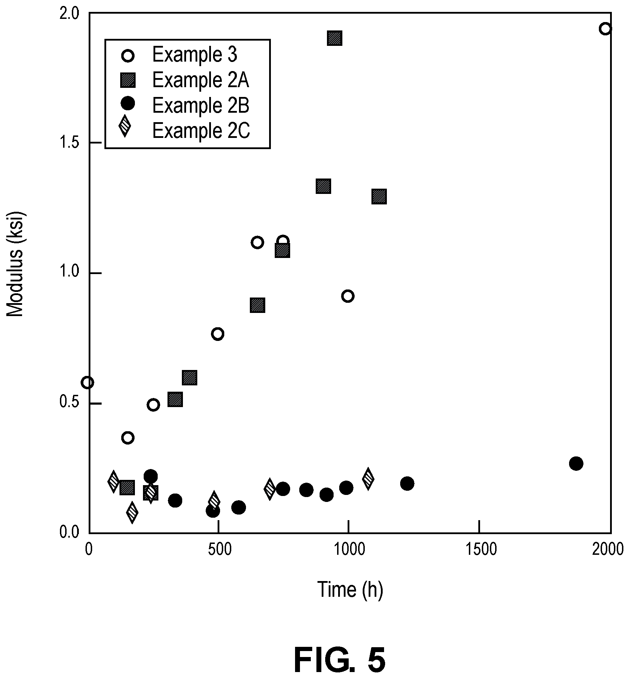

FIG. 5 is a plot depicting thermal aging of composites at 260°C (500°F), revealing a consistent increase in modulus for Comparative Example 2A (traditional dimethyl silphenylene) and Comparative Example 3 (SOA PDMS, RTV 60) as compared to the aging shown at 315.6°C (600°F) in FIG. 4. In comparison, inventive Example 2A (phenylmethyl derivative) and inventive Example 2C (diphenyl derivative) demonstrate significantly superior thermal stability, in accordance with the present disclosure.

In the preceding examples, long term aging at 260°C (500°F) showed retention of flexibility after 1,000 h (Example 2B, ε = 99%, E' = 0.10 ksi) and (Example 2C, ε > 400%, E' = 0.10 ksi) while Example 2A showed a rapid loss of elongation over time (ε = 20%, E' = 1.9 ksi. Analogous thermal aging studies conducted at 260°C (600°F). After 1,000 h, SOA PDMS (Comparative Example 3) becomes a degraded/brittle material after ~400 h, whereas Example 2B, (ε = 15%, E' = 5.9 ksi) and Example 2C (ε = 82%, E' = 0.99 ksi) maintain flexibility.

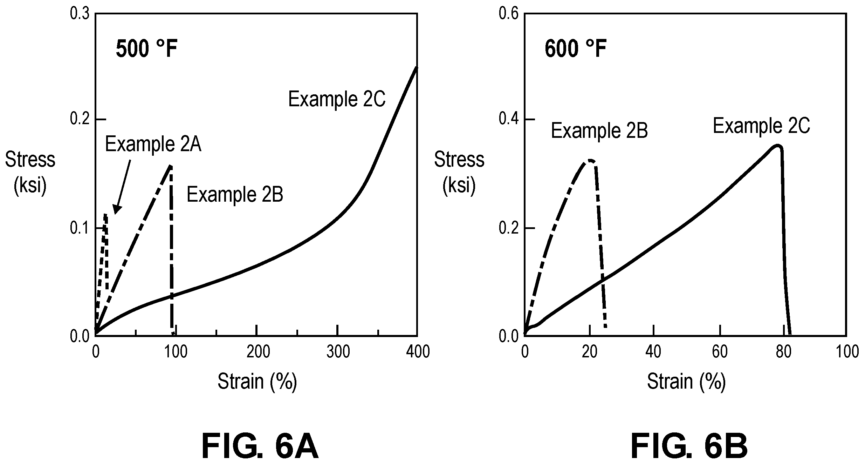

FIG. 6A and 6B depict stress-strain curves in uniaxial extension, evaluated after 1,000 hours of thermal aging at 260°C and 315.6°C (500°F and 600°F), respectively, in accordance with the present disclosure. This data also exhibits improved stress-strain performance at both temperatures by inventive Examples 2B and 2C, representative of the modified silphenylenes, as compared to the Comparative Example 2A.

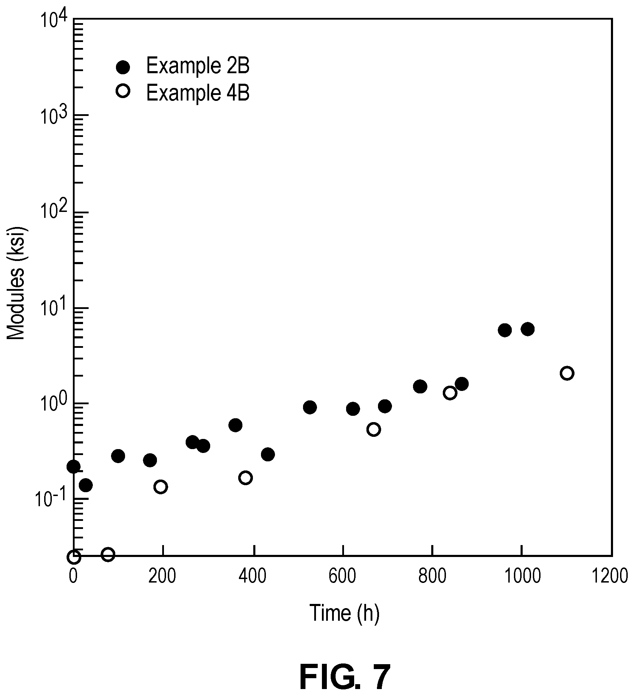

FIG. 7 is a plot depicting room temperature hydrosilylation of phenylmethyl silphenylene (Example 4B, hollow circles) with PFPB materials showing promising stability after thermal aging for 700 hours at 315.6°C (600°F) compared to an analogous sample cured at >232.2°C (>450°F) (inventive Example 2B, solid circles), in accordance with the present disclosure.

While the present teachings have been illustrated with respect to one or more implementations, alterations and/or modifications may be made to the illustrated examples. For example, it may be appreciated that while the process is described as a series of acts or events, the present teachings are not limited by the ordering of such acts or events. Some acts may occur in different orders and/or concurrently with other acts or events apart from those described herein. Also, not all process stages may be required to implement a methodology in accordance with one or more aspects or embodiments of the present teachings. It may be appreciated that structural objects and/or processing stages may be added, or existing structural objects and/or processing stages may be removed or modified. Further, one or more of the acts depicted herein may be carried out in one or more separate acts and/or phases. Furthermore, to the extent that the terms "including," "includes," "having," "has," "with," or variants thereof are used in either the detailed description and the claims, such terms are intended to be inclusive in a manner similar to the term "comprising." The term "at least one of" is used to mean one or more of the listed items may be selected. Further, in the discussion and claims herein, the term "on" used with respect to two materials, one "on" the other, means at least some contact between the materials, while "over" means the materials are in proximity, but possibly with one or more additional intervening materials such that contact is possible but not required. Neither "on" nor "over" implies any directionality as used herein. The term "conformal" describes a coating material in which angles of the underlying material are preserved by the conformal material. The term "about" indicates that the value listed may be somewhat altered, as long as the alteration does not result in nonconformance of the process or structure to the illustrated embodiment. The terms "couple," "coupled," "connect," "connection," "connected," "in connection with," and "connecting" refer to "in direct connection with" or "in connection with via one or more intermediate elements or members." Finally, the terms "exemplary" or "illustrative" indicate the description is used as an example, rather than implying that it is an ideal. Other embodiments of the present teachings may be apparent to those skilled in the art from consideration of the specification and practice of the disclosure herein. It is intended that the specification and examples be considered as exemplary only, with a true scope and spirit of the present teachings being indicated by the following claims.

Further, the present disclosure comprises aspects according to the following clauses.
Clause 1. An elastomer composition, comprising:
   A silyl benzene species;
   at least one phenyl modified species; and
   a vinyl functionalized species; and wherein the elastomer composition comprises the structure: 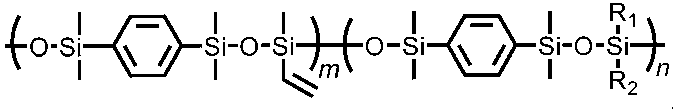 and
   wherein *m* is from about 2 to about 200, *n* is from about 50 to about 5,000, R₁ comprises CH₃, ethyl, propyl, butyl, or phenyl, and R₂ comprises CH₃, ethyl, propyl, butyl, or phenyl.
Clause 2. The elastomer composition of clause 1, further comprising an antioxidant filler.
Clause 3. The elastomer composition of clause 1, further comprising a reinforcing filler.
Clause 4. The elastomer composition of clause 2, wherein the antioxidant filler comprises iron oxide.
Clause 5. The elastomer composition of clause 1, wherein the at least one phenyl modified species comprises bis(dimethylamino) diphenyl silane.
Clause 6. The elastomer composition of clause 1, wherein the vinyl functionalized species is bis(dimethylamino) methylvinyl silane.
Clause 7. The elastomer composition of clause 3, wherein the reinforcing filler comprises fumed silica.
Clause 8. The elastomer composition of clause 1, wherein a phenyl modified dimethylamino group of the at least one phenyl species comprises at least two substituents on the aromatic ring.
Clause 9. The elastomer composition of clause 1, further comprising a vinyl reactive species comprising methylhydrosiloxane-dimethylsiloxane copolymer and pentaerythritol tetrakis(3-mercaptopropionate).
Clause 10. The elastomer composition of clause 2, wherein the antioxidant filler is present in an amount of from about 1 wt% to about 40 wt% based on a total weight of the elastomer composition.
Clause 11. The elastomer composition of clause 1, further comprising a catalyst comprising tris(pentafluorophenyl) borane, a platinum(0)-1,3-divinyl-1,1,3,3-tetramethyldisiloxane complex solution, or a combination thereof.
Clause 12. The elastomer composition of claim 3, wherein the reinforcing filler is present in an amount of from about 1 wt% to about 40 wt% based on a total weight of the elastomer composition.
13. The elastomer composition of claim 1, wherein the elastomer composition maintains elasticity equal to or greater than 25% at temperatures from about 232.2°C (about 450°F) to about 315.6°C (about 600°F) at 1,000 or more hours.
Clause 14. An elastomer composition, comprising:
   1,4 bis-(hydroxydimethylsilyl) benzene;
   at least one phenyl modified dimethylamino silane species;
   a vinyl functionalized dimethylamino silane species;
   iron oxide; and
   fumed silica.
Clause 15. A method for making an elastomer composition, the method comprising:
   providing a 1,4 bis-(hydroxydimethylsilyl) benzene to a reaction vessel;
   reacting the 1,4 bis-(hydroxydimethylsilyl) benzene with at least one phenyl modified dimethylamino silane species and at least one vinyl functionalized dimethylamino silane species to form a polymer material;
   removing the polymer material from the reaction vessel;
   adding an antioxidant filler to the polymer material; and
   incorporating a reinforcing filler into the polymer material.
Clause 16. The method according to clause 15, further comprising adding a catalyst to the elastomer composition.
Clause 17. The method according to clause 15, further comprising curing the composition at temperatures between about -6.7°C to about 37.8°C (about 20°F to about 100°F) for several hours.
Clause 18. The method according to clause 16, wherein:
   the phenyl modified dimethylamino silane species is bis(dimethylamino) diphenyl silane;
   the vinyl functionalized dimethylamino silane species is bis(dimethylamino) methylvinyl silane;
   wherein the phenyl modified dimethylamino silane species is bis(dimethylamino) diphenyl silane with a molecular weight greater than or equal to 500 g/mol; and
   the catalyst comprises tris(pentafluorophenyl) borane.
Clause 19. The method according to clause 15, further comprising adding a vinyl reactive species to the reaction vessel.
Clause 20. The method according to clause 17, further comprising mixing the composition with a solvent before curing the composition.

## Claims

1. An elastomer composition, comprising:
a silyl benzene species;
at least one phenyl modified species; and
a vinyl functionalized species; and wherein the elastomer composition comprises the structure: 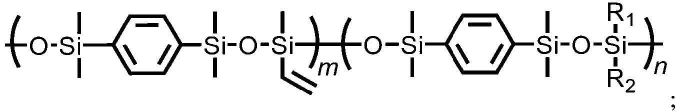 and
wherein *m* is from about 2 to about 200, *n* is from about 50 to about 5,000, R₁ comprises CH₃, ethyl, propyl, butyl, or phenyl, and R₂ comprises CH₃, ethyl, propyl, butyl, or phenyl.

2. The elastomer composition of claim 1, further comprising an antioxidant filler.

3. The elastomer composition of any one of the preceding claims, further comprising a reinforcing filler.

4. The elastomer composition of claim 2, wherein the antioxidant filler comprises iron oxide.

5. The elastomer composition of any one of the preceding claims, wherein the at least one phenyl modified species comprises bis(dimethylamino) diphenyl silane.

6. The elastomer composition of any one of the preceding claims, wherein the vinyl functionalized species is bis(dimethylamino) methylvinyl silane.

7. The elastomer composition of claim 3, wherein the reinforcing filler comprises fumed silica.

8. The elastomer composition of any one of the preceding claims, wherein a phenyl modified dimethylamino group of the at least one phenyl species comprises at least two substituents on the aromatic ring.

9. The elastomer composition of any one of the preceding claims, further comprising a vinyl reactive species comprising methylhydrosiloxane-dimethylsiloxane copolymer and pentaerythritol tetrakis(3-mercaptopropionate).

10. The elastomer composition of claim 2, wherein the antioxidant filler is present in an amount of from about 1 wt% to about 40 wt% based on a total weight of the elastomer composition.

11. The elastomer composition of any one of the preceding claims, further comprising a catalyst comprising tris(pentafluorophenyl) borane, a platinum(0)-1,3-divinyl-1,1,3,3-tetramethyldisiloxane complex solution, or a combination thereof.

12. The elastomer composition of claim 3, wherein the reinforcing filler is present in an amount of from about 1 wt% to about 40 wt% based on a total weight of the elastomer composition.

13. An elastomer composition according to any one of the preceding claims, comprising:
1,4 bis-(hydroxydimethylsilyl) benzene;
at least one phenyl modified dimethylamino silane species;
a vinyl functionalized dimethylamino silane species;
iron oxide; and
fumed silica.

14. A method for making an elastomer composition, the method comprising:
providing a 1,4 bis-(hydroxydimethylsilyl) benzene to a reaction vessel;
reacting the 1,4 bis-(hydroxydimethylsilyl) benzene with at least one phenyl modified dimethylamino silane species and at least one vinyl functionalized dimethylamino silane species to form a polymer material;
removing the polymer material from the reaction vessel;
adding an antioxidant filler to the polymer material; and
incorporating a reinforcing filler into the polymer material.

15. The method according to claim 14, wherein:
the phenyl modified dimethylamino silane species is bis(dimethylamino) diphenyl silane;
the vinyl functionalized dimethylamino silane species is bis(dimethylamino) methylvinyl silane;
wherein the phenyl modified dimethylamino silane species is bis(dimethylamino) diphenyl silane with a molecular weight greater than or equal to 500 g/mol; and
a catalyst comprising tris(pentafluorophenyl) borane is added to the elastomer composition.
